# EUROPÄISCHE PATENTSCHRIFT

(11) **EP 3 656 158 B1**
(45) Veröffentlichungstag und Bekanntmachung des Hinweises auf die Patenterteilung: **28.02.2024**
(21) Anmeldenummer: 18732249.0
(22) Anmeldetag: 11.06.2018
(51) Int. Cl.: H04L 7/04, H04W 52/02

(54) **VERFAHREN ZUM VERTEILEN VON DATEN**
METHOD FOR DISTRIBUTING DATA
PROCÉDÉ DE DISTRIBUTION DE DONNÉES

(30) Priorität: 20.07.2017 DE 102017006898; 14.10.2017 DE 102017009564
(43) Veröffentlichungstag der Anmeldung: 27.05.2020
(73) Patentinhaber: Diehl Metering Systems GmbH, 90451 Nürnberg (DE)
(72) Erfinder: PETKOV, Hristo, 90425 Nürnberg (DE); LAUTENBACHER, Thomas, 91058 Erlangen (DE); KAUPPERT, Thomas, 90455 Nürnberg (DE); GOTTSCHALK, Klaus, 90610 Winkelhaid (DE)
(74) Vertreter: Diehl Patentabteilung
(86) Internationale Anmeldenummer: PCT/EP2018/000304
(87) Internationale Veröffentlichungsnummer: WO 2019/015795

(56) Entgegenhaltungen:
- WO-A1-2016/175905
- US-A1- 2015 318 943

## Beschreibung

Die vorliegende Erfindung betrifft ein Verfahren zum Verteilen von Daten, insbesondere Aktualisierungsprogrammdaten, in einem Kommunikationssystem gemäß dem Oberbegriff des Anspruchs 1 sowie ein Kommunikationssystem und eine Messeinheit.

### Technologischer Hintergrund

Die Datenübertragung von Messeinheiten, wie z. B. Sensoren, Verbrauchsmesser oder Komponenten von Smart-Home-Steuerungen, gewinnt im täglichen Gebrauch zunehmend an Bedeutung. Ein wichtiger Anwendungsbereich von Messeinheiten ist der Einsatz von intelligenten Verbrauchsmessern, sogenannten Smart Metern. Diese sind in der Regel in ein Versorgungsnetz eingebundene Verbrauchsmesser, z. B. für Energie, Strom, Gas oder Wasser, die dem jeweiligen Anschlussbenutzer den tatsächlichen Verbrauch anzeigen und ein Kommunikationsnetz zur Übertragung der Verbrauchsdaten an den Versorger nutzen. Intelligente Verbrauchsmesser haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können die Versorgungsnetze wesentlich besser ausgelastet werden.

Gattungsgemäße Verbrauchsmesser übertragen die anfallenden Messdaten in der Regel in Form von Datenpaketen oder Datentelegrammen per Funk, beispielsweise im SRD (Short Range Devices)- oder ISM (Industrial, Scientific, Medical)-Frequenzbereich an übergeordnete Datensammler (z. B. Konzentratoren, ein Netzwerkknotenpunkt oder die Schaltzentrale des Versorgers). Datentelegramme sind in der Regel aus einer Mehrzahl von Datenpaketen aufgebaut. Die SRD- oder ISM-Frequenzbereiche haben den Vorteil, dass diese lizenzfrei sind und für die Nutzung lediglich eine allgemeine Zulassung notwendig ist. Allerdings besteht das Problem, dass aufgrund der Häufigkeit der Verwendung derartiger Frequenzbereiche für unterschiedlichste technische Einrichtungen, wie etwa Garagentorsteuerungen, Babyphones, Alarmanlagen, WLAN, Bluetooth, Rauchwarnmelder oder dergleichen, es häufig zu Störungen kommen kann.

Bei den intelligenten Verbrauchsmessern ist zum einen der Energieverbrauch, da diese meist batteriegesteuert sind und möglichst lange Wartungsintervalle aufweisen sollen, und zum anderen die Betriebssicherheit von entscheidender Bedeutung. Um einen fehlerfreien und sicheren Betrieb der Verbrauchsmesser garantieren zu können, werden gelegentliche Programmupdates, sogenannte Firmwareupdates, für die Verbrauchsmesser benötigt. Derartige Firmwareupdates bestehen in der Regel aus Aktualisierungsprogrammdaten, die zunehmend via Fernwartung, d. h. beispielsweise über eine Funkverbindung zentral an eine Vielzahl von Verbrauchsmessern übertragen werden. Hinsichtlich der Übertragungsqualität und Übertragungsdauer kann hierbei vor allem die Übertragung größerer Programmdatenpakete über eine Funkverbindung problematisch sein, da die jeweiligen Verbrauchsmesser einzeln und zu bestimmten Zeiten vom Datensammler für das Programmupdate erfolgreich kontaktiert werden müssen und rechtliche Grenzen in Bezug auf die Sendehäufigkeit bzw. die Belegung der Frequenzkanäle (Tastgrad bzw. Duty-Cycle) bestehen.

### Nächstliegender Stand der Technik

In der WO 2016/175905 A1 wird ein drahtloses Sensornetzwerk offenbart, welches Knoten mit variierenden Knotenkennungen entlang eines jeden Zweiges umfasst. Die Netzwerk-Kennungen ermöglichen es den Knoten, Pakete ohne Verwendung von Routing-Tabellen weiterzuleiten. Drahtlose Kommunikationsprotokolle mit niedrigem Tastverhältnis ermöglichen die Weiterleitung von Paketen an alle Knoten in sehr großen Netzwerken bei sehr geringem Stromverbrauch. Broadcast-Übertragungen anstelle von Unicast-Übertragungen zwischen den Knoten nutzen die günstigen Signalausbreitungsbedingungen, um Nachrichten unter Verwendung größtmöglicher Sprünge weiterzuleiten, wobei, wenn möglich, Knoten übersprungen und automatisch an zeitlich oder räumlich variierende Bedingungen angepasst werden. Eine Gruppe von Paketen wird von einem am weitesten entfernten Empfangsknoten, der alle Pakete der Gruppe empfangen hat, gesendet und weitergeleitet. Der Takt eines Empfangsknotens wird automatisch angepasst, je nachdem, welche(s) Paket(e) einer Gruppe von Paketen empfangen wurde(n). Ein Sendeknoten synchronisiert nahegelegene Empfangsknoten. Die Knoten werden über Funk mit integrierter Zeitplanung bereitgestellt.

Die US 2015/318943 A1 offenbart einen Sender und ein Überwachungssystem, das diesen Sender verwendet, wobei der Sender umfasst: einen Multiplexschalter, der so konfiguriert ist, dass er eine Vielzahl von Sensorsignalen einer Vielzahl von Kanälen über eine Vielzahl von Eingangsanschlüssen empfängt, ein Sensorsignal aus der Vielzahl von Sensorsignalen auswählt und das ausgewählte Sensorsignal über einen Ausgangsanschluss ausgibt; einen ersten Verstärker mit variabler Verstärkung, der so konfiguriert ist, dass er das ausgewählte Sensorsignal empfängt, das ausgewählte Sensorsignal mit einer Verstärkung innerhalb eines ersten Verstärkungsbereichs verstärkt und das verstärkte Sensorsignal ausgibt; einen Steuerparameter-Eingangsanschluss, der so konfiguriert ist, dass er einen Eingangssteuerparameter von außerhalb des Senders empfängt; und einen Betriebs- und Schaltselektor der so konfiguriert ist, dass er Operationen gemäß dem Eingangssteuerparameter durchführt, um den Multiplexschalter zu steuern, um das eine Sensorsignal auszuwählen und die Verstärkung des ersten Verstärkers mit variabler Verstärkung zu steuern.

Die EP 2 848 005 B1 beschreibt ein Verfahren zum Verteilen von Aktualisierungsprogrammdaten in einem Kommunikationssystem mit einem Datenerfasser bzw. Datensammler und mehreren Verbrauchsmessern. Die Aktualisierungsprogrammdaten werden hierbei auf Datensegmente aufgeteilt. Der Datensammler eröffnet jeweils eine dedizierte Update-Sitzung pro Verbrauchsmesser, d. h. eine Unicast-Sitzung, und sendet hierbei nach und nach alle Datensegmente an den jeweiligen Verbrauchsmesser. Anschließend bestätigt der Verbrauchsmesser den Empfang aller empfangenen Datensegmente, sodass der Datensammler die Information erhält, welche Datensegmente empfangen worden sind und welche nicht. Dementsprechend kann der Datensammler die verbleibenden noch nicht übertragenen Datensegmente erneut senden, bis alle Datensegmente übertragen worden sind. Sobald der Verbrauchsmesser alle Datensegmente erhalten hat, eröffnet der Datensammler eine dedizierte Update-Sitzung mit dem nächsten Verbrauchsmesser. Die gesendeten Datensegmente sind bei jeder dedizierten Update-Sitzung auch für die anderen Verbrauchsmesser empfangbar, falls diese Verbrauchsmesser die Datensegmente zufällig empfangen können, d. h. sich in Reichweite befinden und zufällig gerade auf der gleichen Frequenz empfangen. Dadurch, dass der Datensammler für jeden Verbrauchsmesser eine dedizierte, d. h. nur für diesen Verbrauchsmesser erstellte, Update-Sitzung eröffnen muss, ergeben sich Nachteile in Hinblick auf Zeitbedarf und Frequenzbelegungsdauer. Beispielsweise muss der Datensammler zunächst jeden Verbrauchsmesser erfolgreich kontaktieren und dann in mehreren Übertragungsschritten alle Datensegmente übertragen. Dementsprechend hoch ist der erforderliche Zeitaufwand, um mehrere Datensegmente an eine Vielzahl von Verbrauchsmessern zu übertragen. Ferner beinhaltet eine dedizierte Update-Sitzung eine genau festgelegte Sendefrequenz, sodass die Wahrscheinlichkeit einer Übertragung der Datensegmente an andere Verbrauchsmesser, die außerhalb dieser dedizierten Update-Sitzung empfangen sollen, gering ist, da diese wahrscheinlich über andere Frequenzkanäle kommunizieren. Demzufolge wird der Großteil der Datensegmente über Verbrauchsmesser-spezifische Update-Sitzungen übertragen. Daraus resultieren eine hohe Frequenzbelegungsdauer sowie ein insgesamt hoher Zeitaufwand für die Durchführung der Verteilung der Aktualisierungsprogrammdaten sowie des gesamten Programmupdates. Ferner müssen die Verbrauchsmesser längere Empfangsbereitschaftszeiten außerhalb ihrer eigenen Update-Sitzung aufweisen, um überhaupt Aktualisierungsprogrammdaten anderer Update-Sitzungen empfangen zu können. Daraus resultiert wiederum ein vergleichsweise hoher Energieverbrauch.

### Aufgabe der vorliegenden Erfindung

Die Aufgabe der vorliegenden Erfindung besteht darin, ein neuartiges Verfahren zur Verteilung von Daten innerhalb eines Kommunikationssystems zur Verfügung zu stellen, durch welches die Daten sicher, zeit- und energieeffektiv sowie mit geringer Frequenzbelegungsdauer übertragen werden können.

### Lösung der Aufgabe

Die vorstehende Aufgabe wird durch die gesamte Lehre des Anspruchs 1 sowie der nebengeordneten Ansprüche gelöst. Zweckmäßige Ausgestaltungen der Erfindung sind in den Unteransprüchen beansprucht.

Bei dem erfindungsgemäßen Verfahren werden Daten, insbesondere Aktualisierungsprogrammdaten, in einem Kommunikationssystem von einem Datensammler an eine Gruppe von Messeinheiten verteilt. Das Kommunikationssystem umfasst eine Mehrzahl von Messeinheiten, insbesondere Verbrauchsmesser, wie z. B. Strom-, Wasser- oder Wärmemengenzähler, die jeweils zum Messen des Verbrauchs eines gelieferten Versorgungsmediums vorgesehen sind, und mindestens einen Datensammler, insbesondere zum Erfassen der aus dem Verbrauch abgeleiteten Verbrauchsdaten der einzelnen Messeinheiten. Jede Messeinheit besitzt hierzu ein Kommunikationsmodul und eine Zeitreferenz- bzw. Frequenzreferenzeinrichtung sowie mindestens einen Prozessor oder Mikrocontroller zum Betreiben der Messeinheit, welcher auf der Grundlage von Programmdaten oder mittels der Verwendung von Programmdaten arbeitet. Die Empfangsbandbreite der Messeinheiten liegt im Schmalbandbereich. Das Verhältnis von Empfangsbandbreite der jeweiligen Messeinheit zu Frequenztoleranz der Frequenzreferenzeinrichtung derselben ist kleiner als 1. Das Verteilen der Daten erfolgt innerhalb einer gemeinsamen Aktualisierungssitzung zwischen dem Datensammler und zumindest einem Teil der Gruppe von Messeinheiten. Die Übertragung der Daten erfolgt somit nicht in dedizierten Sitzungen des Datensammlers mit einzelnen Messeinheiten, sondern gleichzeitig an vorzugsweise alle Messeinheiten der Gruppe. Hierzu werden die Daten zunächst in einer Serie von Datenpaketen, sogenannte Datentelegramme, angeordnet. Innerhalb der zumindest zum Teil gemeinsamen Verteilungssitzung wird von dem Datensammler eine für die Gruppe von Messeinheiten gemeinsame Synchronisationssequenz über eine festlegbare Sendefrequenz gesendet. Die Synchronisationssequenz ist hierbei derart bemessen, dass sich die Frequenzreferenzeinrichtung jeder Messeinheit der Gruppe der Messeinheiten innerhalb einer Sitzung bzw. Verteilungssitzung, insbesondere einer Aktualisierungssitzung, mit der gesendeten Synchronisationssequenz synchronisiert. Die Synchronisation der Frequenzreferenzeinrichtung umfasst die Synchronisation von Empfangsträgerfrequenz und Trägerfrequenz des Datensammlers bzw. Konzentratorträgerfrequenz oder die Synchronisation des Empfangsfilters der Messeinheit, sodass die Signalbandbreite des Datensammlers im Empfangsfenster der Messeinheit liegt. Dabei kann z. B. eine Frequenzschätzung erfolgen, wobei anhand des sich daraus ergebenden Frequenzfehlers die Frequenz angepasst wird, oder die Trägerfrequenz kann entsprechend angepasst werden. Ferner wird die gemeinsame Sitzung zwischen dem Datensammler und der Gruppe der Messeinheiten derart eingerichtet, dass die Daten zu festgelegten Sendezeiten vom Datensammler gesendet und von den Messeinheiten der Gruppe empfangen werden. Durch das erfindungsgemäße Verfahren, wird den Messeinheiten eine bevorstehende Verteilung der Daten durch den Datensammler mittels einer Synchronisationssequenz mitgeteilt. Die Messeinheiten suchen hierbei aktiv nach der Synchronisationssequenz, die über die insbesondere vom Datensammler festgelegte Sendefrequenz gesendet wurde. Dadurch können alle Messeinheiten zunächst die festgelegte Sendefrequenz bestimmen und anhand der Synchronisationssequenz synchronisiert werden. Zudem wird das Kommunikationsmodul hinsichtlich Sendefrequenz und Sendezeit entsprechend eingestellt. Dadurch wird gewährleistet, dass die Übertragung der Daten an die Kommunikationsmodule sicher und im Wesentlichen zeitgleich erfolgt. Zudem erfolgt das Verteilen zeiteffektiv, indem der Datensammler nur eine Sitzung bzw. Aktualisierungs- oder Verteilungssitzung für alle Messeinheiten der Gruppe oder zumindest erheblich weniger Sitzungen insgesamt eröffnen muss. Dadurch werden die Empfangsbereitschaftszeiten der Messeinheiten bzw. der Kommunikationsmodule während des gesamten Verteilungsvorgangs erheblich reduziert, wodurch Energie gespart werden kann. Dementsprechend ist die benötigte Frequenzbelegungsdauer für die Übertragung der gesamten Daten bzw. Aktualisierungsprogrammdaten insgesamt wesentlich geringer.

Im Anschluss an die Synchronisation der Frequenzreferenzeinrichtungen der Messeinheiten der Gruppe, vorzugsweise aller Messeinheiten der Gruppe, erfolgt das Senden der Daten, insbesondere Aktualisierungsprogrammdaten oder eines Teils der Daten durch den Datensammler.

Vorzugsweise handelt es sich bei den Daten um Aktualisierungsprogrammdaten, z. B. eines Firmware-Updates, Verbrauchsdaten, Synchronisationsdaten, Zeitdaten oder dergleichen.

Zweckmäßigerweise kann die Synchronisationssequenz innerhalb der gemeinsamen Sitzung verändert werden. In bevorzugter Weise wird die Synchronisationssequenz zum Ende der Sitzung hin verkürzt. Dadurch kann z. B. nach der erfolgreichen Synchronisation, d. h. nachdem die Synchronisationssequenz von allen Messeinheiten der Gruppe empfangen worden ist und alle Messeinheiten synchronisiert sind, die Synchronisationssequenz verkürzt werden, um nur noch geringe Anpassungen, z. B. der Zeit- bzw. Frequenzreferenz, durchzuführen.

Dementsprechend können in den darauffolgenden Sendungen mehr Datenpakete der Daten im zur Verfügung stehenden Sendezeitraum bzw. Sendevolumen übertragen werden, d. h. zum Ende der Sitzung bzw. Aktualisierungssitzung hin wird das Verhältnis von Daten bzw. Aktualisierungsprogrammdaten zu Synchronisationssequenz vergrößert.

Erfindungsgemäß liegt die Empfangsbandbreite der Messeinheit im Schmalbandbereich. Gemäß einer bevorzugten Ausgestaltung ist die Empfangsbandbreite der jeweiligen Messeinheit kleiner 25 kHz, vorzugsweise kleiner 20 kHz, vorzugsweise kleiner 5 kHz, vorzugsweise kleiner 3 kHz, besonders vorzugsweise kleiner 2 kHz. Die Bestimmung der Bandbreite kann vorzugsweise gemäß der Norm ETSI EN 300 220-1 V3.1.1 (Stand 02/2017) erfolgen.

Erfindungsgemäß ist das Verhältnis von Empfangsbandbreite der jeweiligen Messeinheit zu Frequenztoleranz der Frequenzreferenzeinrichtung derselben kleiner als 1. Zweckmäßigerweise kann das Verhältnis von Empfangsbandbreite der jeweiligen Messeinheit zu Frequenztoleranz der Frequenzreferenzeinrichtung derselben kleiner als 0,5, vorzugsweise kleiner als 0,3 sein.

Die Sendefrequenz des Datensammlers kann von der jeweiligen Messeinheit beispielsweise durch Frequenzabtastung und/oder Frequenzschätzung ermittelt werden.

Das Aussenden der Daten erfolgt hierbei vorzugsweise im Broadcast, d. h. von einem Sender an alle potentiellen Empfänger, oder im Multicast, d. h. von einem Sender an eine ausgewählte Empfängergruppe, erfolgt. Die Auswahl im Multicast kann hierbei durch den Datensammler z. B. anhand einer gerätespezifischen ID-Nummer der jeweiligen Messeinheit erfolgen

Zweckmäßigerweise kann das Verfahren eine Synchronisation der Frequenzreferenzeinrichtungen bzw. Zeitreferenzeinrichtungen der Messeinheiten durch die Synchronisationssequenz erfassen.

Zweckmäßigerweise kann der Synchronisationssequenz eine Zeitinformation zugeordnet werden, wobei das Kommunikationsmodul anhand dieser Zeitinformation die zweite Sendezeit ermitteln kann. Beispielsweise kann hierzu eine andere Synchronisationssequenz verwendet oder die Zeitinformation als Datenmenge an die Synchronisationssequenz angehängt werden. Zudem können der Synchronisationssequenz weitere Informationen, wie z. B. Uhrzeit, Referenzzeit, Referenzfrequenz, ID-Nummer, Umfang und Art der Aktualisierungsprogrammdaten oder dergleichen, zugeordnet sein. Ferner können auch die Zeitabstände zwischen den jeweiligen Synchronisationssequenzen dazu dienen, um ein bevorstehendes Senden der Datenpakete oder eines Teils der Datenpakete anzukündigen.

Ferner kann die Messeinheit eine Synchronisationsbestätigung nach erfolgter Synchronisation generieren und diese an den Datensammler senden, um dem Datensammler die erfolgreiche Synchronisation der Frequenzreferenzeinrichtung der betreffenden Messeinheit mitzuteilen. Daraus resultiert der Vorteil, dass der Datensammler stets die Information erhält, wie viele Messeinheiten der Gruppe die Synchronisationssequenz empfangen haben, und dementsprechend die Synchronisationssequenz so oft senden, bis alle Messeinheiten der Gruppe die Synchronisationssequenz empfangen haben, d. h. alle Messeinheiten der Gruppe synchronisiert sind. Die Übertragungssicherheit wird dadurch noch zusätzlich erhöht.

Vorzugsweise umfasst die zweite Sendezeit mehrere zeitlich aufeinanderfolgende Sendezeitpunkte, an denen der Datensammler die zu sendenden Datenpakete sendet. Dadurch können die zu verteilenden Datenpakete schrittweise übertragen werden, womit die rechtlichen Beschränkungen hinsichtlich der Belegungsdauer der betreffenden Frequenzbänder bzw. die maximal erlaubten Tastgrade eingehalten werden können.

Zweckmäßigerweise können den Datenpaketen und/oder den Serien von Datenpaketen Pilotsynchronisationssequenzen zugeordnet sein. Die Pilotsynchronisationssequenzen stellen hierbei kurze Synchronisationssequenzen z. B. in Form einer Präambel oder eines Beacons dar, die beispielsweise Zeit- und/oder Sendefrequenzinformationen enthalten, anhand derer eine Feinjustierung der Sendefrequenz, der Frequenzreferenzeinrichtung, des Empfangsfensters oder dergleichen vorgenommen werden kann.

Ferner kann das Senden der Datenpakete und/oder der Serie von Datenpaketen alternierend im Wechsel mit den zwischengeschalteten Pilotsynchronisationssequenzen erfolgen, sodass die Feinjustierung auch während der Datenübertragung fortlaufend durchgeführt werden kann. Die Übertragungssicherheit wird dadurch zusätzlich erhöht.

Gemäß einer bevorzugten Ausgestaltung der vorliegenden Erfindung, können die Messeinheiten einen Datenspeicher aufweisen, auf dem die empfangenen Datenpakete oder Teile der Datenpakete, d. h. nicht vollständig empfangene Datenpakete, nach dem Empfang gespeichert werden. Praktischerweise können die Datenpakete bzw. Teile der Datenpakete im Anschluss an die Übertragung im Datenspeicher z. B. mittels des Prozessors zusammengefügt werden (Combining).

Ferner kann das erfindungsgemäße Verfahren die folgenden Schritte umfassen:
- Generieren einer Empfangsbestätigung durch die Messeinheiten anhand der empfangenen Datenpakete und Übermitteln der Empfangsbestätigung durch das jeweilige Kommunikationsmodul an den Datensammler,
- Durchführen eines Datenabgleichs zwischen der Empfangsbestätigung des Kommunikationsmoduls und den zu sendenden Datenpaketen durch den Datensammler, sowie
- Neuanordnen der zu sendenden Datenpakete anhand des Datenabgleichs, sodass nur Datenpakete gesendet werden, die noch nicht von den jeweiligen Kommunikationsmodulen empfangen worden sind.

Dadurch wird gewährleistet, dass der Datensammler nach dem Senden der Datenpakete eine Rückmeldung bzw. Bestätigung der Kommunikationsmodule erhält und mit dieser Bestätigung informiert wird, welche Datenpakete erfolgreich empfangen wurden, indem der Datensammler einen Datenabgleich zwischen den erfolgreich empfangen und den zu sendenden Datenpaketen durchführt. Der Übertragungsstatus der Datenpakete wird von der jeweiligen Messeinheit der Gruppe dem Datensammler fortlaufend übermittelt.

Zweckmäßigerweise können die Messeinheiten die Teile der Datenpakete, die Datenpakete bzw. die Serie(n) von Datenpaketen nach erfolgtem Empfang vervollständigen, z. B. zu Aktualisierungsprogrammdaten zusammenfügen bzw. kombinieren. Im Anschluss daran können die Messeinheiten ihre Firmware bzw. ihre Programmdaten, d. h. den programmierbaren Inhalt ihres Prozessors bzw. Mikrocontrollers, mittels der Aktualisierungsprogrammdaten aktualisieren.

Gemäß einer weiteren Ausgestaltung des Verfahrens kann das Senden der Datenpakete alternierend im Wechsel mit zwischengeschalteten Sendepausen erfolgen. Dadurch wird Energie gespart, falls z. B. ein Kommunikationsmodul einer Messeinheit vorrübergehend durch einen zeitlich begrenzt auftretenden Störer beeinträchtigt wird, indem für die Dauer von einer oder mehreren Sendepausen, in denen ohnehin keine Kommunikation zwischen dem Kommunikationsmodul und dem Datensammler besteht, keine Übertragung bzw. Sendung erfolgt.

Ferner können Pausen zwischen den Empfangsbereitschaftszeiten der jeweiligen Messeinheit vorgesehen sein. Dadurch kann die gesamte Empfangsbereitschaftszeit der Messeinheit verringert werden, falls z. B. der Empfang durch Störer zeitweise beeinträchtigt ist. Dadurch kann der Energiebedarf in besonderem Maße verringert werden.

Zweckmäßigerweise kann von dem Datensammler die Übertragungsqualität der jeweiligen Frequenzen innerhalb eines bestimmten Frequenzbereichs ermittelt und die Auswahl der Sendefrequenz anhand der ermittelten Übertragungsqualität festgelegt werden. Das Ermitteln der Übertragungsqualität kann beispielsweise über eine Störerdetektion erfolgen, die z. B. auf einer Signal-zu-Rausch-Bestimmung (signal to noise ratio) oder einer Signalleistungserfassung auf der jeweiligen Sendefrequenz basiert. Dadurch kann das Festlegen der Sendefrequenz derart erfolgen, dass eine Frequenz ausgewählt wird, die eine möglichst gute Übertragungsqualität aufweist.

Vorzugsweise verstellt die Messeinheit die Empfangsfrequenz mindestens dreimal, vorzugsweise mindestens fünfmal, besonders vorzugsweise mindestens zehnmal zum Empfang der Synchronisationssequenz.

Zusätzlich kann das Verteilen der Daten auch im Unicast auf unterschiedlichen Frequenzen erfolgen, z. B. kann der Datensammler eine zusätzliche dedizierte Sitzung mit mindestens einer Messeinheit der Gruppe von Messeinheiten durchführen, falls diese Messeinheit die Daten nicht über die gemeinsame Broadcast-Sitzung empfangen hat oder nicht vollständig empfangen konnte. Die zusätzlichen Unicast-Sitzungen der Daten erfolgen hierbei vorzugsweise auf unterschiedlichen Frequenzen, sodass die Frequenz an die Übertragungssituation der jeweiligen Messeinheit anpassbar ist.

Zweckmäßigerweise können auch Synchronisationssequenzen im Unicast versendet werden. Hierbei handelt es sich jedoch um sehr kurze Synchronisationssequenzen. Ferner kann die gemeinsame Synchronisationssequenz innerhalb der gemeinsamen Sitzung der Gruppe von Messeinheiten derart bemessen sein, dass diese mindestens dreimal, vorzugsweise mindestens zehnmal, besonders vorzugsweise mindestens zwanzigmal so lang ist wie eine Synchronisationssequenz im Unicast.

Ferner kann die Synchronisationssequenz am Stück, d. h. ohne Pause, gesendet werden. Dadurch wird die Empfangswahrscheinlichkeit der Synchronisationssequenz durch die Messeinheit in besonderem Maße erhöht.

Nebengeordnet beansprucht die vorliegende Erfindung auch ein Kommunikationssystem, in welchem die Daten vorzugsweise nach dem erfindungsgemäßen Verfahren verteilt werden, mit einer Mehrzahl von Messeinheiten, insbesondere Verbrauchsmessern, die jeweils zum Messen des Verbrauchs eines gelieferten Versorgungsmediums angeordnet sind, und einem Datensammler, z. B. zum Erfassen und Weiterleiten der aus dem Verbrauch abgeleiteten Verbrauchsdaten und/oder zum Verteilen von Aktualisierungsprogrammdaten. Jede Messeinheit umfasst hierbei ein Kommunikationsmodul und eine Frequenzreferenzeinrichtung sowie einen Prozessor, Mikrocontroller oder dergleichen zum Betreiben der Messeinheit auf der Grundlage von Programmdaten oder mittels der Verwendung von Programmdaten. Die Messeinheiten und der Datensammler sind in einem Kommunikationsnetz angeordnet. Die Empfangsbandbreite der Messeinheiten liegt im Schmalbandbereich. Das Verhältnis von Empfangsbandbreite der jeweiligen Messeinheit zu Frequenztoleranz der Frequenzreferenzeinrichtung derselben ist kleiner als 1. Der Datensammler ist hierbei dazu hergerichtet, die Daten, wie z. B. Aktualisierungsprogrammdaten, über das Kommunikationssystem innerhalb einer für die Gruppe von Messeinheiten gemeinsamen Sitzung bzw. Aktualisierungssitzung auf einer Sendefrequenz zu senden. Zweckmäßigerweise wird innerhalb der gemeinsamen Sitzung eine für die Messeinheiten gemeinsame Synchronisationssequenz vom Datensammler gesendet. Die Messeinheiten suchen aktiv nach der Synchronisationssequenz. Die Synchronisationssequenz ist dabei derart bemessen, dass sich die Frequenzreferenzeinrichtungen jeder Messeinheit der Gruppe der Messeinheiten innerhalb einer Sitzung bzw. Aktualisierungssitzung mit der gesendeten Synchronisationssequenz synchronisieren können, d. h. lang genug in Hinblick auf die jeweiligen Toleranzen der Frequenzreferenzeinrichtungen (Quarzfehler) gewählt wird. Die Synchronisation der Frequenzreferenzeinrichtung umfasst die Synchronisation von Empfangsträgerfrequenz und Trägerfrequenz des Datensammlers bzw. Konzentratorträgerfrequenz.

Im Anschluss an die Synchronisation der Frequenzreferenzeinrichtungen der Messeinheiten der Gruppe, vorzugsweise aller Messeinheiten der Gruppe, erfolgt das Senden der Daten, insbesondere Aktualisierungsprogrammdaten oder eines Teils der Daten durch den Datensammler.

Ferner beansprucht die vorliegende Erfindung auch eine Messeinheit, insbesondere einen Verbrauchsmesser, welche dazu hergerichtet ist, die Daten vorzugsweise mittels des erfindungsgemäßen Verfahrens zu empfangen und/oder zu senden. Die Messeinheit umfasst hierzu ein Kommunikationsmodul, eine Frequenzreferenzeinrichtung und vorzugsweise einen Prozessor zum Betreiben der Messeinheit auf der Grundlage von Programmdaten oder mittels der Verwendung von Programmdaten. Die Empfangsbandbreite der Messeinheiten liegt im Schmalbandbereich. Das Verhältnis von Empfangsbandbreite der jeweiligen Messeinheit zu Frequenztoleranz der Frequenzreferenzeinrichtung derselben ist kleiner als 1. Die Messeinheit kann hierbei eine von einem Sender, wie z. B. dem Datensammler, gesendete Synchronisationssequenz über eine Empfangsfrequenz empfangen. Die Messeinheit ist dabei derart betrieben, dass sie die Empfangsfrequenz mindestens dreimal, vorzugsweise mindestens fünfmal, besonders vorzugsweise mindestens zehnmal zum Empfang der Synchronisationssequenz verstellt, wobei das Verstellen der Empfangsfrequenz z. B. über die Frequenzreferenzeinrichtung und/oder das Kommunikationsmodul erfolgen kann. Die Messeinheit sucht aktiv nach der Synchronisationssequenz.

Im Anschluss an die Synchronisation der Empfangsfrequenz der Frequenzreferenzeinrichtungen, erfolgt das Empfangen der Daten, insbesondere Aktualisierungsprogrammdaten oder eines Teils der Daten vom Datensammler.

Die Daten werden hierbei vorzugsweise im Broad- und/oder Multicast übertragen bzw. gesendet und/oder empfangen.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine stark vereinfachte schematische Darstellung mehrerer Verbrauchsmesser, welche jeweils mittels eines Kommunikationsmoduls mit einem Datensammler kommunizieren;
- Fig. 2: eine Ausgestaltung eines Ablaufplans des erfindungsgemäßen Verfahrens;
- Fig. 3: eine vereinfachte schematische Darstellung eines aus einer Serie von Datenpaketen bestehenden Datentelegramms;
- Fig. 4: eine erste Ausgestaltung der zeitlichen Abfolge des erfindungsgemäßen Verfahrens;
- Fig. 5: eine vereinfachte schematische Darstellung der zeitlichen Abfolge einer Sendung von Datenpaketen, die alternierend mit zwischengeschalteten Pilotsynchronisationssequenzen gesendet werden;
- Fig. 6: eine vereinfachte schematische Darstellung der zeitlichen Abfolge einer Sendung von Datenpaketen, die alternierend mit zwischengeschalteten Sendepausen gesendet werden;
- Fig. 7: eine vereinfachte schematische Darstellung der zeitlichen Abfolge einer Sendung von einer Serie von Datenpaketen, die fehlende und neue Datenpakete umfasst;
- Fig. 8: eine zweite Ausgestaltung der zeitlichen Abfolge des erfindungsgemäßen Verfahrens;
- Fig. 9: eine vereinfachte schematische Darstellung einer Suchabfolge, bei der drei Messeinheiten unterschiedliche Frequenzkanäle zum Empfang der Synchronisationssequenz abtasten;
- Fig. 10: eine vereinfachte schematische Darstellung von drei aufeinanderfolgenden Sendungen von Synchronisationssequenz und Datenpaketen, sowie
- Fig. 11: eine vereinfachte schematische Darstellung der zeitlichen Abfolge der Synchronisationssequenz und der Sendung von Datenpaketen, die mit zwischengeschalteten Pilotsynchronisationssequenzen gesendet werden.

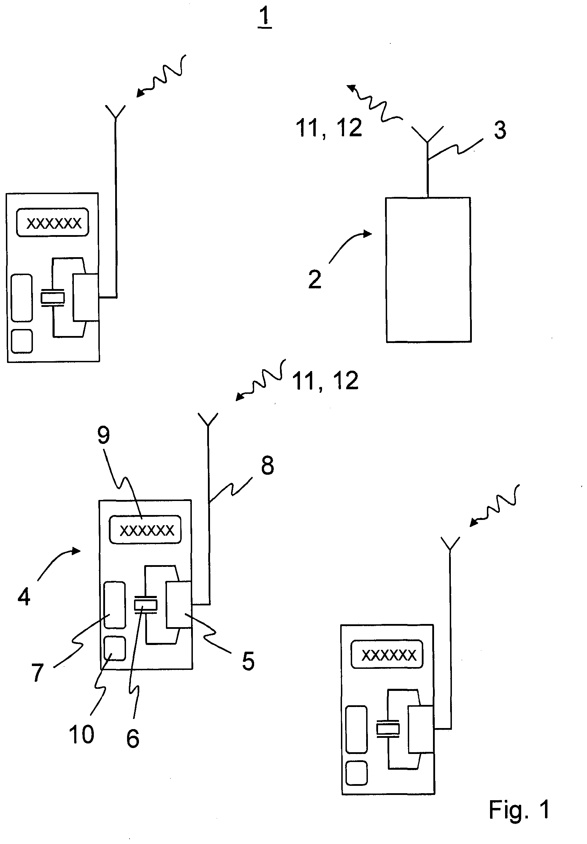

Bezugsziffer 1 in Fig. 1 bezeichnet ein erfindungsgemäßes Kommunikationssystem. Das Kommunikationssystem 1 umfasst einen Datensammler 2 mit einer Antenne 3 zum Senden und Empfangen von Daten und/oder Signalen sowie mehrere Messeinheiten bzw. Verbrauchsmesser 4, wie z. B. Gas-, Wasser- oder Stromzähler, die dazu vorgesehen sind, den individuellen Verbrauch eines Verbrauchers an einem Versorgungsmedium zu erfassen. Jeder Verbrauchsmesser 4 umfasst ein Kommunikationsmodul 5, welches Daten und/oder Signale über eine Antenne 8 senden und empfangen kann. Ferner umfasst jeder Verbrauchsmesser 4 eine Zeit- und/oder Frequenzreferenzeinrichtung 6, die z. B. mittels eines Quarzoszillators (Uhrenquarz, HF-Quarz oder dergleichen) einen Zeittakt, z. B. zur Zeitbestimmung, vorgeben kann. Zweckmäßigerweise kann jeder Verbrauchsmesser 4 eine Anzeige 9 umfassen, die dazu dient, den aktuellen Zählerstand anzuzeigen, wodurch eine manuelle Ablesung des Zählerstandes erfolgen kann.

Die Verbrauchsmesser 4 übermitteln den aktuellen Zählerstand in Form von Verbrauchsdaten zu vorzugsweise festgelegten Stichzeiten an den Datensammler 2. Die Übertragung der Daten erfolgt hierbei über Funk, insbesondere über die ISM- oder SRD-Frequenzbereiche, vorzugsweise zwischen 863 MHz und 870 MHz. Diese Frequenzbereiche haben den Vorteil, dass sie lizenzfrei nutzbar sind, besitzen jedoch den Nachteil, dass sie aufgrund rechtlicher Beschränkungen nur begrenzt belegt werden dürfen. Es liegt somit eine Begrenzung des Tastgrades bzw. der Frequenzbelegungsdauer vor.

Ferner umfasst jeder Verbrauchsmesser 4 einen Prozessor 10, welcher der Steuerung des Verbrauchsmessers 4 dient. Der Prozessor 10 arbeitet auf Grundlage eines Betriebsprogramms bzw. einer Firmware, welche zur Fehlerbehebung oder zur Nachrüstung neuer Funktionen von Zeit zu Zeit aktualisiert werden muss. Die Aktualisierung derartiger Betriebsprogramme erfolgt über Aktualisierungsprogrammdaten, die entweder manuell am Verbrauchsmesser 4 oder per Fernwartung über Funk installiert werden. Die Installation der Aktualisierungsprogrammdaten über Funk hat den Vorteil, dass kein Zugang des Wartungspersonals zum Verbrauchsmesser 4 notwendig ist.

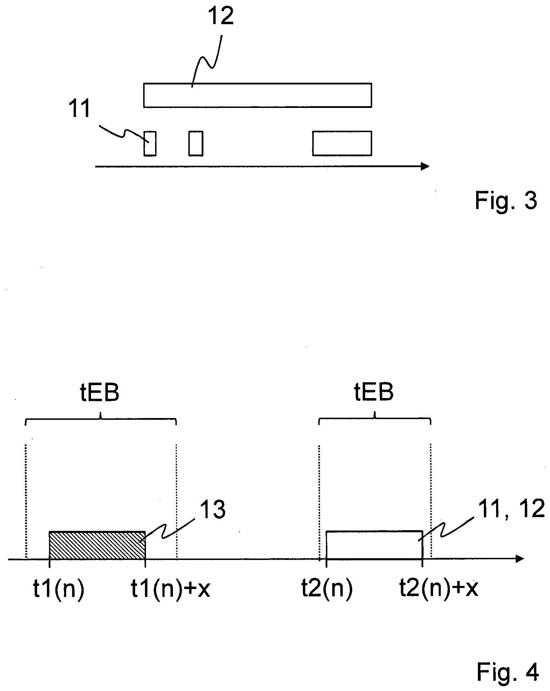

Die Daten bzw. Aktualisierungsprogrammdaten werden vom Datensammler 2, wie in Fig. 3 vereinfacht dargestellt, zunächst in Datenpaketen 11 oder Serien von Datenpaketen 11, so genannten Datentelegrammen 12, angeordnet und anschließend über das Kommunikationsnetz des Kommunikationssystems 1 verteilt. Die Verbrauchsmesser 4 können die Datenpakete 11 bzw. die Datentelegramme 12 mittels des Kommunikationsmoduls 5 und der Antenne 8 empfangen und in einem Datenspeicher 7 bis zum Updatevorgang oder darüber hinaus zwischenspeichern.

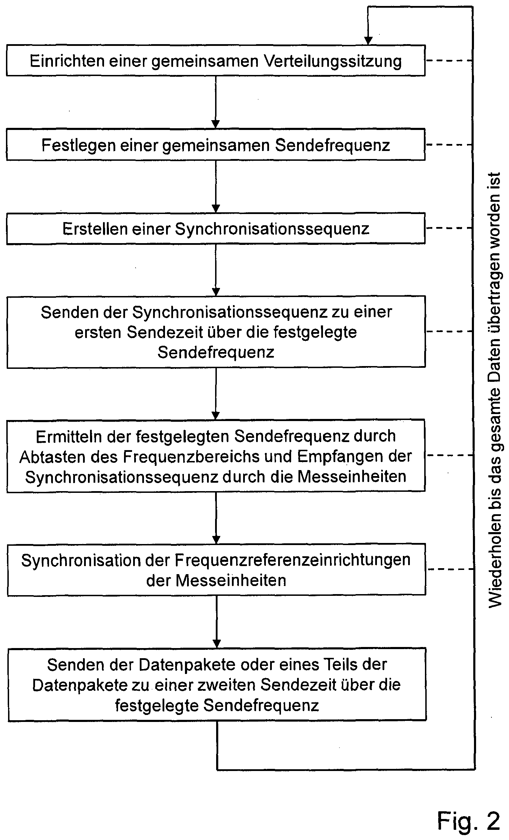

Ein zeitlicher Ablauf einer Ausgestaltung des Verfahrens zum Verteilen von Daten ist in Fig. 2 schematisch dargestellt. Zweckmäßigerweise richtet der Datensammler 2 zunächst eine gemeinsame Sitzung bzw. Aktualisierungssitzung zwischen dem Datensammler 2 und einer Gruppe von Verbrauchsmessern 4 ein. Die Daten bzw. Aktualisierungsprogrammdaten werden hierbei zu festgelegten Sendezeiten vom Datensammler 2 gesendet und von den Verbrauchsmessern 4 der Gruppe empfangen. Hierzu wird zunächst eine gemeinsame Sendefrequenz durch den Datensammler 2 festgelegt, wobei der Datensammler 2 vorzugsweise zunächst die Übertragungsqualität der Frequenzen innerhalb eines bestimmten Frequenzbereichs, z. B. des SRD- oder ISM-Frequenzbandbereichs, ermitteln kann. Anschließend kann die Sendefrequenz anhand der ermittelten Übertragungsqualitäten durch den Datensammler 2 festgelegt werden.

Zweckmäßigerweise erstellt der Datensammler 2 eine Synchronisationssequenz 13, die der Datensammler 2 über die festgelegte Sendefrequenz zu einer vorbestimmten ersten Sendezeit t1(n) sendet. Das Senden erfolgt vorzugsweise mittels Broadcast- oder Multicastübertragung. Insbesondere sollen hierbei alle Kommunikationsmodule 5 der jeweiligen Verbrauchsmesser 4 zum Zeitpunkt des Sendens des Datensammlers 2 empfangsbereit sein. Der Zeitraum der Empfangsbereitschaft tEB sollte gemäß Fig. 4 größer sein als der Sendezeitraum des Datensammlers 2, der zur ersten Sendezeit t1 (n) beginnt und nach einem Zeitraum x, z. B. x = 6 Minuten, endet. Der Zeitraum der Empfangsbereitschaft tEB der Verbrauchsmesser 4 ist hierbei größer als die vorgesehene Sendezeit des Datensammlers 2, um auch bei auftretenden Taktabweichungen der Frequenzreferenzeinrichtungen 6 eine Empfangsbereitschaft der Kommunikationsmodule 5 zu den entsprechenden Sendezeiten des Datensammlers 2 noch gewährleisten zu können.

Vorzugsweise benutzt der Datensammler 2 die rechtlich maximal mögliche relative Frequenzbelegungsdauer zum Senden der Synchronisationssequenz 13, um möglichst viele Verbrauchsmesser 4 zu erreichen. Beispielswiese liegt die relative Frequenzbelegungsdauer im Frequenzbereich von 869,65 bis 869,70 MHz bei kleiner als 10 %. Dementsprechend kann der Datensammler 2 innerhalb eines Zeitraums von einer Stunde etwa sechs Minuten lang senden. Innerhalb dieser sechs Minuten können die Kommunikationsmodule 5 die festgelegte Sendefrequenz des Datensammlers 2 ermitteln, indem sie den Frequenzbereich schrittweise abtasten. Hierbei bleiben die Kommunikationsmodule 5 für einen bestimmten Zeitraum, z. B. wenige Sekunden, auf einer Frequenz empfangsbereit und wechseln anschließend zur nächsten Frequenz. Anhand des Empfangs der Synchronisationssequenz 13 des Datensammlers 2 auf einer bestimmten Frequenz kann das Kommunikationsmodul 5 des jeweiligen Verbrauchsmessers 4 die festgelegte Sendefrequenz des Datensammlers 2 ermitteln. Mittels der in der Synchronisationssequenz 13 enthaltenen Information (z. B. Frequenzreferent, Zeitreferenz, ID-Nummer, Uhrzeit und/oder Sendezeit) kann der Verbrauchsmesser 4 bzw. die Frequenzreferenzeinrichtung 6 des Verbrauchsmessers 4 synchronisiert werden.

Im Anschluss an die Synchronisation der Frequenzreferenzeinrichtungen 6 der Verbrauchsmesser 4 der Gruppe, vorzugsweise aller Verbrauchsmesser 4 der Gruppe, erfolgt das Senden der Datenpakete 11 oder eines Teils der Datenpakete 11 durch den Datensammler 2 zu einer zweiten Sendezeit t2(n) über die festgelegte Sendefrequenz. Der Zeitraum der Empfangsbereitschaft tEB der Kommunikationsmodule 5 zur zweiten Sendezeit t2(n) kann hierbei wesentlich näher am Sendezeitraum der Datenpakete 11 zwischen t2(n) und t2(n) + x liegen, da die Frequenzreferenzeinrichtungen 6 der Verbrauchsmesser 4 zuvor durch die Synchronisationssequenz 13 synchronisiert wurden und eine Abweichung der Frequenzreferenzeinrichtungen 6 nur dementsprechend gering sein kann.

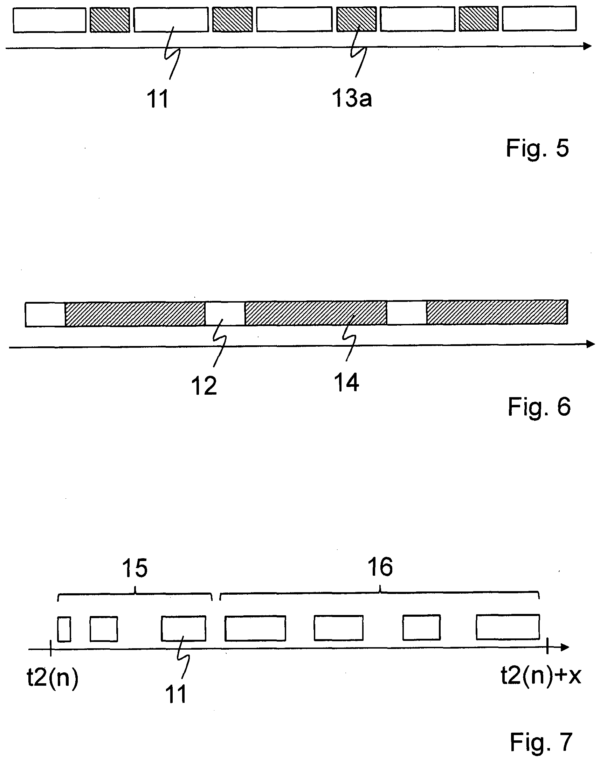

Die Synchronisationssequenz 13 kann alternativ eine Art Countdown enthalten, sodass die Verbrauchsmesser 4 mit dem Empfang der Synchronisationssequenz 13 die Information erhalten, wann die zweite Sendezeit t2(n) eintritt. Dies kann z. B. über unterschiedliche Synchronisationsworte erfolgen. Alternativ oder zusätzlich kann der Verbrauchsmesser 4 auch sogenannte Pilotsynchronisationssequenzen 13a nutzen, die gemäß Fig. 5 zwischen den Datenpaketen 11 bzw. den Datentelegrammen 12 alternierend im Wechsel mit diesen gesendet werden. Die Pilotsynchronisationssequenzen 13a dienen hierbei dazu, die Frequenz zwischen den Datenübertragungen ggf. geringfügig anzupassen, d. h. eine Feinjustierung während der Datenübertragung vorzunehmen.

Alternativ oder zusätzlich können auch gemäß Fig. 6 Sendepausen 14 zwischen den Datensendungen vorgesehen sein. Dadurch kann Energie gespart werden, für den Fall, dass ein andauernder Störer die Sendefrequenz blockiert. Unnötige Datensendungen, die aufgrund des Störers das Kommunikationsmodul 5 nicht erreichen würden, können somit vermieden werden. Gemäß einer bevorzugten Ausgestaltung des erfindungsgemäßen Verfahrens können alle Verfahrensschritte bis zum Senden der Datenpakete durch den Datensammler 2 mehrfach nacheinander durchgeführt werden, bevor die Datenpakete 11 durch den Datensammler 2 zur zweiten Sendezeit t2(n) gesendet werden. Ebenso kann die zweite Sendezeit t2(n) mehrere aufeinanderfolgende Sendezeitpunkte n umfassen, an denen Datenpakete 11 bzw. Datentelegramme 12 gesendet werden. Vorzugsweise wird vor allem das Senden der Synchronisationssequenz 13 durch den Datensammler 2 zu der ersten Sendezeit t1(n) über die festgelegte Sendefrequenz und das Ermitteln dieser festgelegten Sendefrequenz durch jedes der Kommunikationsmodule 5 sowie die anschließende Synchronisation der jeweiligen Frequenzreferenzeinrichtungen 6 der Messeinheiten mehrfach durchgeführt, bevor das Senden der Datenpakete 11 durch den Datensammler 2 erfolgt.

Ferner können die Kommunikationsmodule 5 der Verbrauchsmesser 4 Bestätigungen generieren, z. B. in Form von Datenpaketen oder eines Beacons, und diese über das Kommunikationsnetz an den Datensammler 2 senden. Beispielsweise kann das Kommunikationsmodul 5 eine Synchronisationsbestätigung SB nach erfolgtem Empfang der Synchronisationssequenz 13 und/oder nach erfolgter Synchronisation generieren und diese an den Datensammler 2 senden, um dem Datensammler 2 die Synchronisation der Frequenzreferenzeinrichtung 6 zu bestätigen.

Ferner kann das Verfahren vorzugsweise das Generieren einer Empfangsbestätigung EB umfassen, die dazu dient, dem Datensammler 2 die Information zu übermitteln, welche Datenpakete 11 vom jeweiligen Kommunikationsmodul 5 empfangen worden sind. Die Empfangsbestätigung EB kann hierbei durch das Kommunikationsmodul 5 anhand der empfangenen Datenpakete 11 erstellt werden. Der Datensammler 2 kann anschließend anhand der in der Empfangsbestätigung EB enthaltenen Information über die empfangenen Datenpakete 11 einen Datenabgleich mit den zu sendenden Datenpaketen 11 durchführen. Mittels dieses Datenabgleichs kann der Datensammler 2 die noch fehlenden Datenpakete 11 ermitteln und dementsprechend die zu sendenden Datenpakete 11 neu anordnen, sodass nur noch Datenpakete 11 gesendet werden, die noch nicht von den jeweiligen Kommunikationsmodulen 5 empfangen worden sind.

Das Senden der Datenpakete 11 durch den Datensammler 2 sowie das Generieren der Empfangsbestätigung EB durch die Verbrauchsmesser 4, das Durchführen des Datenabgleichs durch den Datensammler 2 sowie das Neuordnen der zu sendenden Datenpakete 11 durch den Datensammler 2 kann hierbei vorzugsweise so oft wiederholt werden, bis alle Daten von den jeweiligen Kommunikationsmodulen 5 vollständig empfangen worden sind. Dementsprechend kann eine Datensendung des Datensammlers 2 gemäß Fig. 7 derart ausgestaltet sein, dass diese aus fehlenden Datenpaketen 15 sowie neuen Datenpaketen 16 zusammengesetzt ist.

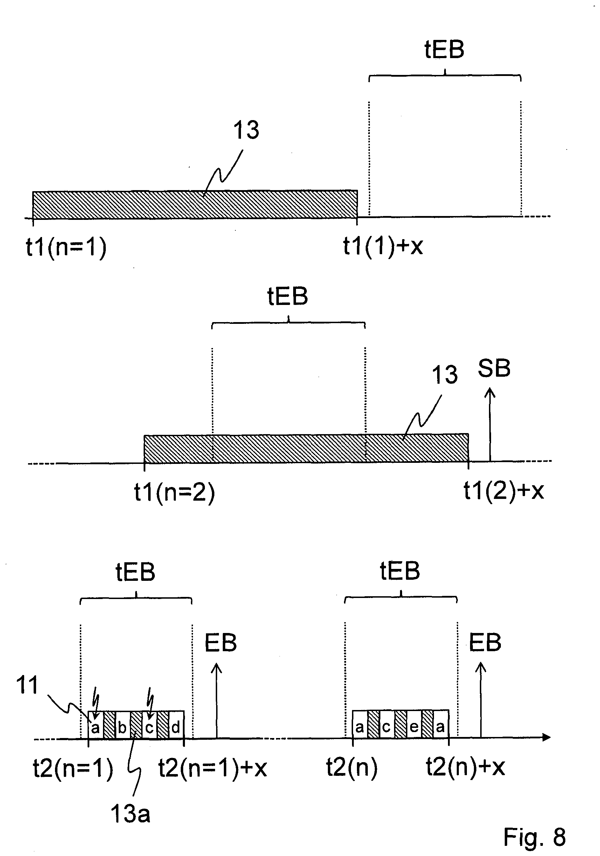

In Fig. 8 ist eine weitere Ausgestaltung des zeitlichen Ablaufs des erfindungsgemäßen Verfahrens zwischen einem Verbrauchsmesser 4 aus der Gruppe der Messeinheiten und dem Datensammler 2 dargestellt. Hierbei wird zunächst eine Synchronisationssequenz 13 zur ersten Sendezeit t1(n) über die festgelegte Sendefrequenz vom Datensammler 2 zu einem Sendezeitpunkt n=1 bis zum Zeitpunkt t(n=1) + x gesendet. Diese Synchronisationssequenz 13 wird von dem Kommunikationsmodul 5 des Verbrauchsmessers 4 zu diesem Sendezeitraum t1(n=1) bis t1(n=1) + x nicht empfangen, da das Empfangsbereitschaftsfenster tEB außerhalb des Sendezeitraums der Synchronisationssequenz 13 liegt. Dementsprechend übermittelt das Kommunikationsmodul 5 keine Synchronisationsbestätigung SB an den Datensammler 2. Aufgrund dessen versucht der Datensammler 2 die Synchronisationssequenz zu weiteren Sendezeitpunkten n der ersten Sendezeit t1(n) zu übermitteln. Dies geschieht so lange, bis das Kommunikationsmodul 5 des Verbrauchsmessers 4 die Synchronisationssequenz 13, wie in Fig. 8 gezeigt, im Sendezeitraum t1(n=2) bis t1(n=2) + x empfangen, eine Synchronisation durchgeführt und diese mit dem Generieren und Senden der Synchronisationsbestätigung SB an den Datensammler 2 bestätigt hat. Infolgedessen stellt der Datensammler 2 das Senden der Synchronisationssequenz 13 ein und fährt fort mit dem Übermitteln der Datenpakete 11 zum nächstmöglichen Sendezeitraum, der zweiten Sendezeit t2(n). Hierbei übermittelt der Datensammler 2 zunächst die Datenpakete 11 (a, b, c, d) alternierend im Wechsel mit Pilotsynchronisationssequenzen 13a über die festgelegte Sendefrequenz zum Sendezeitpunkt n=1. Im Anschluss an den Sendezeitraum t2(n=1) bis t2(n=1) + x generiert der Verbrauchsmesser 4 eine Empfangsbestätigung EB und sendet diese an den Datensammler 2 über die festgelegte Sendefrequenz.

Wie in Fig. 8 dargestellt, ist der Empfang zweier Datenpakete 11 (a, c) gestört, während zwei Datenpakete 11 (b, d) ungestört empfangen wurden. Folglich beinhaltet die Empfangsbestätigung EB des Verbrauchsmessers 4 die Information, dass zwei Datenpakete 11 (b, d) vollständig empfangen worden sind. Dementsprechend kann der Datensammler 2 die noch zu sendenden Datenpakete 11 neu anordnen, sodass dieser zu einem darauffolgenden Sendezeitpunkt n die fehlenden Datenpakete 11 (a, c) sowie auch ein neues Datenpaket 11 (e) über die festgelegte Sendefrequenz senden kann.

Ferner kann der Datensammler 2 auch den Sendezeitraum entsprechend der rechtlichen Beschränkung bezüglich des Tastgrades nutzen, um die zu sendenden Datenpakete 11 wiederholt zu senden, wie in Fig. 8 anhand des Datenpakets 11 (a) dargestellt. Im Anschluss an das Senden der Datenpakete 11 (a, c, e) und das Empfangen dieser Datenpakete 11 (a, c, e) generiert der Verbrauchsmesser 4 erneut eine Empfangsbestätigung EB, welche die Information enthält, dass die Datenpakete 11 (a, c, e) bzw. (a-e) erfolgreich empfangen worden sind, und sendet diese über die festgelegte Sendefrequenz an den Datensammler 2.

Die einzelnen Datenpakete 11 können hierbei im Datenspeicher 7 des Verbrauchsmessers 4 hinterlegt werden, sodass das Senden der Datenpakete 11 auch über mehrere Stunden bzw. mehrere Tage oder Wochen hinweg erfolgen kann. Jeder Verbrauchsmesser 4 kann die Datenpakete 11 bzw. die Serie von Datenpaketen 11 nach erfolgtem Empfang vervollständigen und/oder zusammenfügen. Sobald die Daten zusammengefügt sind, kann z. B. das Programmupdate auf Basis der Daten bzw. Aktualisierungsprogrammdaten vom jeweiligen Verbrauchsmesser 4 durchgeführt werden. Anschließend kann der Verbrauchsmesser 4 das erfolgreich durchgeführte Programmupdate über eine Bestätigung dem Datensammler 2 mitteilen.

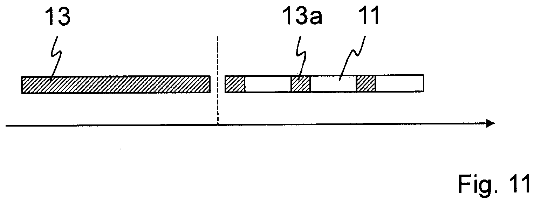

Gemäß Fig. 11 können die Daten in Form von Datenpaketen 11 nach dem Empfang der Synchronisationssequenz 13 und somit nach erfolgter Synchronisation (in Fig. 11 anhand der gestrichelten Linie dargestellt) gesendet werden. Die Sendung der Datenpakete 11 erfolgt hierbei vorzugsweise im Broad- oder Multicast über die entsprechende Sendefrequenz mit zwischengeschalteten Pilotsynchronisationssequenzen 13a, die zur fortlaufenden Synchronisation während der Datensendung vorgesehen sind. Die Pilotsynchronisationssequenzen 13a werden hierbei ebenfalls im Broad- oder Multicast gesendet. Es handelt sich dabei jedoch um Synchronisationssequenzen, die hinsichtlich ihrer Länge Synchronisationssequenzen gleichen, die herkömmlicherweise im Unicast gesendet werden. Die Synchronisationssequenz 13 ist demgegenüber deutlich länger, vorzugsweise mindestens dreimal, vorzugsweise mindestens zehnmal, besonders vorzugsweise mindestens zwanzigmal so lang wie eine Synchronisationssequenz einer Unicast-Sendung.

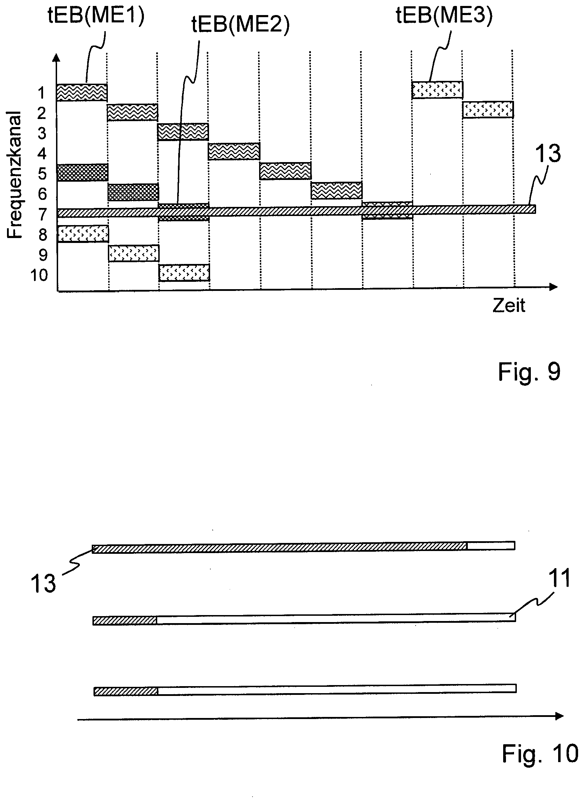

In Fig. 9 ist eine Suchabfolge von drei Messeinheiten ME1, ME2, M3 dargestellt, welche auf unterschiedlichen Frequenzen bzw. Frequenzkanälen (wie in Fig. 9 anhand von Frequenzkanal 1-10 dargestellt) nach der Synchronisationssequenz 13 zur Ermittlung der Sendefrequenz suchen, bzw. die Frequenzkanäle abtasten. Die Synchronisationssequenz 13 wird gemäß Fig. 9 vom Datensammler 2 über Frequenzkanal 7 an die Messeinheiten ME1, ME2, ME3 gesendet, d. h. insbesondere im Broad- oder Multicast. Der Sendezeitraum der Synchronisationssequenz 13 ist den Messeinheiten ME1, ME2, ME3 bekannt. Dadurch sind diese zum vereinbarten Sendezeitraum empfangsbereit, d. h. die Messeinheiten suchen zu dieser Zeit die Synchronisationssequenz 13 auf unterschiedlichen Kanälen, z. B. mittels Frequenzabtastung und/oder Frequenzschätzung. Hierzu sendet der Datensammler 2 innerhalb der gemeinsamen Sitzung eine für die Messeinheiten ME1, ME2, ME3 gemeinsame Synchronisationssequenz 13, deren Dauer derart bemessen ist, dass sich die Frequenzreferenzeinrichtung 6 jeder Messeinheit der Gruppe innerhalb der Verteilungssitzung mit der gesendeten Synchronisationssequenz 13 synchronisiert.

Die Messeinheiten beginnen mit der Suche auf einem bestimmten oder zufällig gewählten Frequenzkanal (z. B. ME1 auf Frequenzkanal 1, ME2 auf Frequenzkanal 5 und ME3 auf Frequenzkanal 8), d. h. sie sind für einen bestimmten Zeitraum auf diesem Frequenzkanal empfangsbereit. Falls sie die Synchronisationssequenz 13 auf diesem Frequenzkanal nicht empfangen, wechseln sie zum nächsten Frequenzkanal. Beispielsweise empfängt Messeinheit ME2 die Synchronisationssequenz 13 auf Frequenzkanal 7 nach dem dritten Verstellen des Frequenzkanals. Das Verstellen des Frequenzkanals durch die Messeinheit kann hierbei zufällig, pseudozufällig oder nach einer festlegbaren Systematik erfolgen (z. B. durch Inkrementieren der Frequenzkanäle). Ferner kann die Abtastung der Frequenzkanäle nach erfolgloser Suche erneut beginnen, wie anhand von ME3 in Fig. 9 dargestellt, z. B. wenn bei einer Inkrementierung der Frequenzkanäle der höchste Frequenzkanal erreicht wurde.

Der Empfänger bzw. die Messeinheit besitzt hierbei eine bestimmte Empfangsbandbreite, in der er die Synchronisationssequenz 13 empfangen kann. Die gesamte Empfangsbandbreite kann beispielsweise 2 kHz betragen, sodass die Messeinheit bei z. B. 100 Frequenzkanälen und einer Synchronisationssequenz 13 mit einer Dauer von 2 s ein Empfangsfenster von etwa 20 ms pro Frequenzkanal vorsehen kann, d. h. der Zeitraum der Empfangsbereitschaft der Messeinheit pro Frequenzkanal beträgt 20 ms. Die Sendefrequenz wird hierbei z. B. durch das schrittweise Abtasten der Frequenzkanäle ermittelt. In praktischer Weise kann die Suchabfolge nach dem Empfang der Synchronisationssequenz 13 beendet oder bei erfolglosem Durchlauf erneut begonnen werden. Folglich kann die Messeinheit den Frequenzkanal der Synchronisationssequenz 13, d. h. die Sendefrequenz, bestenfalls während des ersten Empfangsfensters ermitteln, d. h. in den ersten 20 ms der Suchabfolge.

Zweckmäßigerweise kann die Synchronisationssequenz 13 innerhalb der gemeinsamen Sitzung oder Aktualisierungssitzung verändert werden. Wie in Fig. 10 gezeigt, kann sie zum Ende der Sitzung hin verkürzt werden, so dass zum Beginn der Sitzung zunächst eine Synchronisation der Messeinheiten erfolgt bzw. Im Vordergrund steht. Nach erfolgter Synchronisation, welche z. B. durch den Empfang der Synchronisationsbestätigungen SB angezeigt wird, kann dann der Anteil an Daten in einem Sendezeitraum erhöht werden, um diese schneller zu übertragen. Dadurch wird das Verhältnis von Daten zu Synchronisationssequenz 13 innerhalb der Sitzung verändert, sodass zum Ende der Sitzung hin mehr Daten übertragen werden, denen kurze Synchronisationssequenzen vor-, nach- und/oder zwischengeschaltet sind.

Ferner spielt das Verhältnis von Empfangsbandbreite der jeweiligen Messeinheit zu Frequenztoleranz der Frequenzreferenzeinrichtung 6 eine wichtige Rolle. Die Frequenztoleranz ist hierbei durch das Produkt aus Sendefrequenz und Quarzfehler (der Frequenzreferenzeinrichtung 6) bestimmbar. Beispielsweise ergibt sich dadurch für eine Frequenzreferenzeinrichtung 6 mit einem 10 ppm Quarzfehler (z. B. mit einem TCX-Oszillator) und einer Sendefrequenz von 868 MHz eine Frequenztoleranz von etwa 8,6 kHz (8,6 kHz = 868.000 kHz * 10 *10⁻⁶). Jedoch wird für eine ausreichend gute Übertragungsqualität eine sehr geringe Empfangsbandbreite benötigt. Bei bekannten Verfahren ergeben sich hierdurch Übertragungsprobleme, da hier für eine erfolgreiche Übertragung die Frequenztoleranz in der Regel ein Vielfaches der Empfangsbandbreite ist.

Die Empfangsbandbreite der Messeinheit liegt in bevorzugter Weise im Schmalbandbereich, z. B. bei kleiner 25 kHz, vorzugsweise kleiner 20 kHz, vorzugsweise kleiner 5 kHz, vorzugsweise kleiner 3 kHz, besonders vorzugsweise kleiner 2 kHz. Bei dem erfindungsgemäßen Verfahren ist das Verhältnis von Empfangsbandbreite der jeweiligen Messeinheit zu Frequenztoleranz der Frequenzreferenzeinrichtung 6 derselben bevorzugt kleiner als 1, vorzugsweise kleiner als 0,5 und besonders vorzugsweise kleiner als 0,3. Demgemäß ergibt sich für eine Empfangsbandbreite von z. B. 1 kHz und eine Frequenztoleranz von 4,3 kHz ein Verhältnis von Empfangsbandbreite zu Frequenztoleranz von 0,23. Beispielsweise kann die Bestimmung der Bandbreite nach der Norm ETSI EN 300 220-1 V3.1.1 (Stand 02/2017) erfolgen.

Demgegenüber liegt das Verhältnis von Empfangsbandbreite zu Frequenztoleranz bei bekannten Verfahren üblicherweise im Bereich von 12 (z. B. 12 kHz Empfangsbandbreite zu 1 kHz Frequenztoleranz, bei einem 5 ppm Quarz und einer Sendefrequenz von 169 MHz). Überraschenderweise hat sich jedoch gezeigt, dass anhand des erfindungsgemäßen Verfahrens dennoch eine erfolgreiche Sitzung bzw. Aktualisierungssitzung im sogenannten "Schmalband-Broadcast" oder "Schmalband-Multicast" erfolgen kann, sodass das vorliegende Verfahren unter anderem einen ganz besonderen Beitrag auf diesem Gebiet darstellt.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Kommunikationssystem
- 2: Datensammler
- 3: Antenne
- 4: Verbrauchsmesser
- 5: Kommunikationsmodul
- 6: Frequenzreferenzeinrichtung
- 7: Datenspeicher
- 8: Antenne
- 9: Anzeige
- 10: Prozessor
- 11: Datenpaket
- 12: Datentelegramm
- 13: Synchronisationssequenz
- 13a: Pilotsynchronisationssequenz
- 14: Sendepause
- 15: fehlende Datenpakete
- 16: neue Datenpakete

- EB: Empfangsbestätigung
- SB: Synchronisationsbestätigung
- tEB: Zeitraum der Empfangsbereitschaft (Messeinheit)
- t1 (n): erste Sendezeit
- t2(n): zweite Sendezeit
- n: Sendezeitpunkt

## Patentansprüche

1. Verfahren zum Verteilen von Daten in einem Kommunikationssystem (1), mit
einer Gruppe von Messeinheiten, insbesondere Verbrauchsmessern (4), die jeweils zum Messen des Verbrauchs eines gelieferten Versorgungsmediums angeordnet sind, und
einem Datensammler (2), wobei
jede Messeinheit ein Kommunikationsmodul (5) und eine Frequenzreferenzeinrichtung (6) sowie mindestens einen Prozessor (10) zum Betreiben der Messeinheit umfasst, wobei
die Messeinheiten und der Datensammler (2) in einem Kommunikationsnetz angeordnet sind, wobei
die Empfangsbandbreite der Messeinheit im Schmalbandbereich liegt, und wobei
das Verhältnis von Empfangsbandbreite der jeweiligen Messeinheit zu Frequenztoleranz der Frequenzreferenzeinrichtung (6) derselben kleiner ist als 1, wobei
die Daten über das Kommunikationssystem (1) innerhalb einer für die Gruppe von Messeinheiten gemeinsamen Sitzung von dem Datensammler (2) in einer Sendefrequenz gesendet werden,
innerhalb der gemeinsamen Sitzung von dem Datensammler (2) eine für die Messeinheiten gemeinsame Synchronisationssequenz (13) gesendet wird, und
die Messeinheiten aktiv nach der Synchronisationssequenz (13) suchen, wobei
die Synchronisationssequenz (13) derart bemessen ist, dass sich die Frequenzreferenzeinrichtung (6) jeder Messeinheit der Gruppe der Messeinheiten innerhalb einer Sitzung mit der gesendeten Synchronisationssequenz (13) synchronisiert, wobei die Synchronisation der Frequenzreferenzeinrichtung (6) die Synchronisation einer Empfangsträgerfrequenz auf die Trägerfrequenz des Datensammlers umfasst, so dass
im Anschluss an die Synchronisation der Frequenzreferenzeinrichtungen (6) der Messeinheiten der Gruppe das Senden der Daten durch den Datensammler (2) erfolgt.

2. Verfahren nach Anspruch 1, **dadurch gekennzeichnet, dass** es sich bei den Daten um Aktualisierungsprogrammdaten, Verbrauchsdaten, Synchronisationsdaten, Zeitdaten oder dergleichen handelt.

3. Verfahren nach Anspruch 1 oder 2, **dadurch gekennzeichnet, dass** die Synchronisationssequenz (13) innerhalb der gemeinsamen Sitzung verändert wird, insbesondere zum Ende der Sitzung hin verkürzt wird.

4. Verfahren nach einem der vorhergehenden Ansprüche, **dadurch gekennzeichnet, dass** die Daten sowie die Synchronisationssequenz (13) in Datenpaketen (11) übertragen werden und das Verhältnis von Daten zu Synchronisationssequenz (13) innerhalb der Sitzung verändert wird, insbesondere zum Ende der Sitzung hin vergrößert wird.

5. Verfahren nach einem der vorhergehenden Ansprüche, **dadurch gekennzeichnet, dass** die Empfangsbandbreite der jeweiligen Messeinheit kleiner 25 kHz, vorzugsweise kleiner 20 kHz, vorzugsweise kleiner 5 kHz, vorzugsweise kleiner 3 kHz, besonders vorzugsweise kleiner 2 kHz beträgt.

6. Verfahren nach einem der vorhergehenden Ansprüche, **dadurch gekennzeichnet, dass** das Verhältnis von Empfangsbandbreite der jeweiligen Messeinheit zu Frequenztoleranz der Frequenzreferenzeinrichtung (6) derselben kleiner ist als 0,5, vorzugsweise kleiner ist als 0,3.

7. Verfahren nach einem der vorhergehenden Ansprüche, **dadurch gekennzeichnet, dass** die Sendefrequenz des Datensammlers (2) von der jeweiligen Messeinheit durch Frequenzabtastung und/oder Frequenzschätzung ermittelt wird.

8. Verfahren nach einem der vorhergehenden Ansprüche, **dadurch gekennzeichnet, dass** das Verteilen der Daten im Broadcast oder Multicast erfolgt.

9. Verfahren nach einem der vorhergehenden Ansprüche, **dadurch gekennzeichnet, dass** das Verfahren ferner den folgenden Schritt umfasst: Synchronisation der Frequenzreferenzeinrichtungen (6) der Messeinheiten durch die Synchronisationssequenz (13).

10. Verfahren nach einem der vorhergehenden Ansprüche, **dadurch gekennzeichnet, dass** der Synchronisationssequenz (13) eine Zeitinformation zugeordnet ist und das Kommunikationsmodul (5) anhand der Zeitinformation die zweite Sendezeit t2(n) ermitteln kann.

11. Verfahren nach einem der vorhergehenden Ansprüche, **dadurch gekennzeichnet, dass** die Messeinheit nach erfolgter Synchronisation eine Synchronisationsbestätigung SB generiert und diese an den Datensammler (2) sendet, um dem Datensammler (2) die Synchronisation der Frequenzreferenzeinrichtung (6) zu bestätigen.

12. Verfahren nach einem der vorhergehenden Ansprüche, **dadurch gekennzeichnet, dass** die zweite Sendezeit t2(n) mehrere zeitlich aufeinanderfolgende Sendezeitpunkte n umfasst, an denen der Datensammler (2) die zu sendenden Datenpakete (11) sendet.

13. Verfahren nach einem der vorhergehenden Ansprüche, **dadurch gekennzeichnet, dass** den Datenpaketen (11) und/oder der Serie von Datenpaketen (11) Pilotsynchronisationssequenzen (13a) zugeordnet sind, wobei insbesondere vorgesehen ist, **dass** das Senden der Datenpakete (11) und/oder der Serie von Datenpaketen (11) alternierend im Wechsel mit den zwischengeschalteten Pilotsynchronisationssequenzen (13a) erfolgt.

14. Verfahren nach einem der vorhergehenden Ansprüche, **dadurch gekennzeichnet, dass** die Messeinheiten einen Datenspeicher (7) aufweisen und die empfangenen Datenpakete (11) oder Teile der Datenpakete (11) im Datenspeicher (7) gespeichert werden.

15. Verfahren nach einem der vorhergehenden Ansprüche, **dadurch gekennzeichnet, dass** das Verfahren ferner folgende Schritte umfasst:
- Generieren einer Empfangsbestätigung EB durch die Messeinheiten anhand der empfangenen Datenpakete (11) und Übermitteln der Empfangsbestätigung EB durch das jeweilige Kommunikationsmodul (5) an den Datensammler (2),
- Durchführen eines Datenabgleichs zwischen der Empfangsbestätigung EB des Kommunikationsmoduls (5) und den zu sendenden Datenpaketen (11) durch den Datensammler (2), sowie
- Neuanordnen der zu sendenden Datenpakete (11) anhand des Datenabgleichs, sodass nur Datenpakete (11) gesendet werden die noch nicht von den jeweiligen Kommunikationsmodulen (5) empfangen worden sind.

16. Verfahren nach Anspruch 14 oder 15, **dadurch gekennzeichnet, dass** die Messeinheiten die Teile der Datenpakete (11) und/oder die Datenpakete (11) nach erfolgtem Empfang vervollständigen bzw. zu den Daten zusammenfügen.

17. Verfahren nach einem der vorhergehenden Ansprüche, **dadurch gekennzeichnet, dass** das Senden der Datenpakete (11) oder der Serie von Datenpaketen (11) alternierend im Wechsel mit zwischengeschalteten Sendepausen (14) erfolgt.

18. Verfahren nach einem der vorhergehenden Ansprüche, **dadurch gekennzeichnet, dass** Empfangspausen zwischen den Empfangsbereitschaftszeiten der jeweiligen Messeinheit vorgesehen sind.

19. Verfahren nach einem der vorhergehenden Ansprüche, **dadurch gekennzeichnet, dass** über den Datensammler (2) die Übertragungsqualität der Frequenzen innerhalb eines bestimmten Frequenzbereichs ermittelt und die Sendefrequenz anhand der Übertragungsqualitäten festgelegt wird.

20. Verfahren nach einem der vorhergehenden Ansprüche, **dadurch gekennzeichnet, dass** die Messeinheit die Empfangsfrequenz mindestens dreimal, vorzugsweise mindestens fünfmal, besonders vorzugsweise mindestens zehnmal zum Empfang der Synchronisationssequenz (13) verstellt.

21. Verfahren nach einem der vorhergehenden Ansprüche, **dadurch gekennzeichnet, dass** das Verteilen der Daten zusätzlich im Unicast auf unterschiedlichen Frequenzen erfolgt.

22. Verfahren nach einem der vorhergehenden Ansprüche, **dadurch gekennzeichnet, dass** die Synchronisationssequenz (13) derart bemessen ist, dass diese mindestens dreimal, vorzugsweise mindestens zehnmal, besonders vorzugsweise mindestens zwanzigmal so lang ist wie eine Synchronisationssequenz im Unicast.

23. Verfahren nach einem der vorhergehenden Ansprüche, **dadurch gekennzeichnet, dass** die Synchronisationssequenz (13) am Stück gesendet wird.

24. Kommunikationssystem (1) zum Verteilen von Daten bei welchem die Daten insbesondere gemäß eines Verfahrens nach einem der vorhergehenden Ansprüche verteilt werden, umfassend
eine Gruppe von Messeinheiten, insbesondere Verbrauchsmessern (4), die jeweils zum Messen des Verbrauchs eines gelieferten Versorgungsmediums angeordnet sind, und
einen Datensammler (2), wobei
jede Messeinheit ein Kommunikationsmodul (5) und eine Frequenzreferenzeinrichtung (6) sowie einen Prozessor (10) zum Betreiben der Messeinheit umfasst, wobei
die Empfangsbandbreite der Messeinheit im Schmalbandbereich liegt, und wobei
das Verhältnis von Empfangsbandbreite der jeweiligen Messeinheit zu Frequenztoleranz der Frequenzreferenzeinrichtung (6) derselben kleiner ist als 1, wobei
der Datensammler (2) dazu hergerichtet ist, die Daten über das Kommunikationssystem (1) innerhalb einer für die Gruppe von Messeinheiten gemeinsamen Sitzung in einer Sendefrequenz zu senden, wobei
innerhalb der gemeinsamen Sitzung eine für die Messeinheiten gemeinsame Synchronisationssequenz (13) vom Datensammler (2) gesendet wird, und
die Messeinheiten aktiv nach der Synchronisationssequenz (13) suchen, wobei
die Synchronisationssequenz (13) derart bemessen ist, dass sich die Frequenzreferenzeinrichtung (6) jeder Messeinheit der Gruppe der Messeinheiten innerhalb einer Sitzung mit der gesendeten Synchronisationssequenz (13) synchronisiert, wobei die Synchronisation der Frequenzreferenzeinrichtung (6) die Synchronisation einer Empfangsträgerfrequenz auf die Trägerfrequenz des Datensammlers umfasst, so dass
im Anschluss an die Synchronisation der Frequenzreferenzeinrichtungen (6) der Messeinheiten der Gruppe das Senden der Daten durch den Datensammler (2) erfolgt.

25. Messeinheit, insbesondere Verbrauchsmesser (4), welche Daten empfangen und/oder senden kann und bei welcher die Daten vorzugsweise mittels eines Verfahrens nach einem der vorhergehenden Ansprüche verteilt werden, umfassend
ein Kommunikationsmodul (5),
eine Frequenzreferenzeinrichtung (6),
einen Prozessor (10) zum Betreiben der Messeinheit, wobei
die Empfangsbandbreite der Messeinheit im Schmalbandbereich liegt, und wobei
das Verhältnis von Empfangsbandbreite der jeweiligen Messeinheit zu Frequenztoleranz der Frequenzreferenzeinrichtung (6) derselben kleiner ist als 1, wobei
die Messeinheit dazu hergerichtet ist, eine von einem Sender gesendete Synchronisationssequenz (13) über eine Empfangsfrequenz zu empfangen, und
die Messeinheit derart betrieben ist, dass sie die Empfangsfrequenz zum Empfang der Synchronisationssequenz (13) mindestens dreimal, vorzugsweise mindestens fünfmal, besonders vorzugsweise mindestens zehnmal verstellt, so dass die Messeinheit aktiv nach der Synchronisationssequenz (13) sucht, und so dass im Anschluss an die Synchronisation der Empfangsfrequenz der Frequenzreferenzeinrichtungen (6), das Empfangen der Daten, insbesondere Aktualisierungsprogrammdaten oder eines Teils der Daten vom Datensammler (2) erfolgt.

## Claims

1. Method for distributing data in a communication system (1), having
a group of metering units, in particular consumption meters (4), which are each arranged to measure the consumption of a delivered supply medium, and
a data collector (2), wherein
each metering unit comprises a communication module (5) and a frequency reference device (6), and also at least one processor (10) to operate the metering unit, wherein
the metering units and the data collector (2) are arranged in a communication network, wherein
the receive bandwidth of the metering unit is in the narrowband range, and wherein
the ratio between the receive bandwidth of the respective metering unit and the frequency tolerance of the frequency reference device (6) of said metering unit is less than 1, wherein
the data are transmitted by the data collector (2) at a transmit frequency via the communication system (1) within a session common to the group of metering units,
a synchronization sequence (13) common to the metering units is transmitted by the data collector (2) within the common session, and
the metering units actively look for the synchronization sequence (13), wherein
the synchronization sequence (13) is dimensioned in such a way that the frequency reference device (6) of each metering unit in the group of metering units is synchronized with the transmitted synchronization sequence (13) within a session, wherein the synchronization of the frequency reference device (6) comprises the synchronization of a receive carrier frequency to the carrier frequency of the data collector, with the result that
the data are transmitted by the data collector (2) after the synchronization of the frequency reference devices (6) of the metering units in the group.

2. Method according to Claim 1, **characterized in that** the data are update program data, consumption data, synchronization data, time data or the like.

3. Method according to Claim 1 or 2, **characterized in that** the synchronization sequence (13) is modified within the common session, in particular is shortened towards the end of the session.

4. Method according to one of the preceding claims, **characterized in that** the data and the synchronization sequence (13) are transmitted in data packets (11) and the ratio between the data and the synchronization sequence (13) is modified within the session, in particular is increased towards the end of the session.

5. Method according to one of the preceding claims, **characterized in that** the receive bandwidth of the respective metering unit is less than 25 kHz, preferably less than 20 kHz, preferably less than 5 kHz, preferably less than 3 kHz, particularly preferably less than 2 kHz.

6. Method according to one of the preceding claims, **characterized in that** the ratio between the receive bandwidth of the respective metering unit and the frequency tolerance of the frequency reference device (6) of said metering unit is less than 0.5, preferably less than 0.3.

7. Method according to one of the preceding claims, **characterized in that** the transmit frequency of the data collector (2) is determined by the respective metering unit through frequency scanning and/or frequency estimation.

8. Method according to one of the preceding claims, **characterized in that** the data are distributed in broadcast or multicast.

9. Method according to one of the preceding claims, **characterized in that** the method further comprises the following step: synchronization of the frequency reference devices (6) of the metering units by means of the synchronization sequence (13) .

10. Method according to one of the preceding claims, **characterized in that** time information is assigned to the synchronization sequence (13) and the communication module (5) can determine the second transmit time t2(n) on the basis of the time information.

11. Method according to one of the preceding claims, **characterized in that,** on completion of the synchronization, the metering unit generates a synchronization acknowledgement SB and transmits it to the data collector (2) in order to acknowledge the synchronization of the frequency reference device (6) to the data collector (2).

12. Method according to one of the preceding claims, **characterized in that** the second transmit time t2(n) comprises a plurality of temporally successive transmit times n at which the data collector (2) transmits the data packets (11) which are to be transmitted.

13. Method according to one of the preceding claims, **characterized in that** pilot synchronization sequences (13a) are assigned to the data packets (11) and/or the series of data packets (11), wherein it is in particular provided **that** the data packets (11) and/or the series of data packets (11) are transmitted in alternation with the interspersed pilot synchronization sequences (13a).

14. Method according to one of the preceding claims, **characterized in that** the metering units have a data memory (7) and the received data packets (11) or parts of the data packets (11) are stored in the data memory (7).

15. Method according to one of the preceding claims, **characterized in that** the method further comprises the following steps:
- generation of an acknowledgement of receipt EB by the metering units on the basis of the received data packets (11) and communication of the acknowledgement of receipt EB by the respective communication module (5) to the data collector (2),
- performance by the data collector (2) of a data synchronization between the acknowledgement of receipt EB of the communication module (5) and the data packets (11) to be transmitted, and
- rearrangement of the data packets (11) to be transmitted on the basis of the data synchronization, so that only data packets (11) which have not yet been received by the respective communication modules (5) are transmitted.

16. Method according to Claim 14 or 15, **characterized in that,** once reception is completed, the metering units complete the parts of the data packets (11) and/or the data packets (11) or combine them into the data.

17. Method according to one of the preceding claims, **characterized in that** the data packets (11) or the series of data packets (11) are transmitted in alternation with interspersed transmit pauses

18. Method according to one of the preceding claims, **characterized in that** receive pauses are provided between the ready-to-receive times of the respective metering unit.

19. Method according to one of the preceding claims, **characterized in that** the transmission quality of the frequencies within a specific frequency range is determined via the data collector (2) and the transmit frequency is defined on the basis of the transmission qualities.

20. Method according to one of the preceding claims, **characterized in that** the metering unit adjusts the receive frequency at least three times, preferably at least five times, particularly preferably at least ten times for the reception of the synchronization sequence (13).

21. Method according to one of the preceding claims, **characterized in that** the data are additionally distributed on different frequencies in unicast.

22. Method according to one of the preceding claims, **characterized in that** the synchronization sequence (13) is dimensioned in such a way that it is at least three times, preferably at least ten times, particularly preferably at least twenty times as long as a synchronization sequence in unicast.

23. Method according to one of the preceding claims, **characterized in that** the synchronization sequence (13) is transmitted in one piece.

24. Communication system (1) for distributing data, in which the data are distributed, in particular, using a method according to one of the preceding claims, comprising
a group of metering units, in particular consumption meters (4), which are each arranged to measure the consumption of a delivered supply medium, and
a data collector (2), wherein
each metering unit comprises a communication module (5) and a frequency reference device (6), and also a processor (10) to operate the metering unit, wherein
the receive bandwidth of the metering unit is in the narrowband range, and wherein
the ratio between the receive bandwidth of the respective metering unit and the frequency tolerance of the frequency reference device (6) of said metering unit is less than 1, wherein
the data collector (2) is configured to transmit the data at a transmit frequency via the communication system (1) within a session common to the group of metering units, wherein
a synchronization sequence (13) common to the metering units is transmitted by the data collector (2) within the common session, and
the metering units actively look for the synchronization sequence (13), wherein
the synchronization sequence (13) is dimensioned in such a way that the frequency reference device (6) of each metering unit in the group of metering units is synchronized with the transmitted synchronization sequence (13) within a session, wherein the synchronization of the frequency reference device (6) comprises the synchronization of a receive carrier frequency to the carrier frequency of the data collector, with the result that
the data are transmitted by the data collector (2) after the synchronization of the frequency reference devices (6) of the metering units in the group.

25. Metering unit, in particular consumption meter (4), which can receive and/or transmit data and in which the data are preferably distributed by means of a method according to one of the preceding claims, comprising
a communication module (5),
a frequency reference device (6),
a processor (10) to operate the metering unit, wherein
the receive bandwidth of the metering unit is in the narrowband range, and wherein
the ratio between the receive bandwidth of the respective metering unit and the frequency tolerance of the frequency reference device (6) of said metering unit is less than 1, wherein
the metering unit is configured to receive a synchronization sequence (13) transmitted by a transmitter via a receive frequency, and
the metering unit is operated in such a way that it adjusts the receive frequency for receiving the synchronization sequence (13) at least three times, preferably at least five times, particularly preferably at least ten times, with the result that the metering unit actively looks for the synchronization sequence (13), and with the result that the data, in particular update program data, or some of the data are received from the data collector (2) after the synchronization of the receive frequency of the frequency reference devices (6) .

## Revendications

1. Procédé de distribution de données dans un système de communication (1), comportant
un groupe d'unités de mesure, en particulier des dispositifs de mesure de consommation (4), qui sont respectivement agencés pour mesurer la consommation d'un milieu d'alimentation fourni, et
un collecteur de données (2), dans lequel chaque unité de mesure comprend un module de communication (5) et un dispositif de référence de fréquence (6) ainsi qu'au moins un processeur (10) pour faire fonctionner l'unité de mesure, dans lequel les unités de mesure et le collecteur de données (2) sont agencés dans un réseau de communication, dans lequel la largeur de bande de réception de l'unité de mesure se situe dans une plage à bande étroite, et dans lequel le rapport entre la largeur de bande de réception de l'unité de mesure respective et la tolérance de fréquence de son dispositif de référence de fréquence (6) est inférieur à 1, dans lequel
les données sont émises par l'intermédiaire du système de communication (1) à l'intérieur d'une session commune au groupe d'unités de mesure par le collecteur de données (2) à une fréquence d'émission,
à l'intérieur de la session commune, une séquence de synchronisation (13) commune aux unités de mesure est émise par le collecteur de données (2), et
les unités de mesure recherchent activement la séquence de synchronisation (13), dans lequel
la séquence de synchronisation (13) est dimensionnée de telle sorte que le dispositif de référence de fréquence (6) de chaque unité de mesure du groupe d'unités de mesure à l'intérieur d'une session se synchronise avec la séquence de synchronisation (13) émise, dans lequel la synchronisation du dispositif de référence de fréquence (6) comprend la synchronisation d'une fréquence porteuse de réception sur la fréquence porteuse du collecteur de données, de telle sorte que,
suite à la synchronisation des dispositifs de référence de fréquence (6) des unités de mesure du groupe, l'émission des données par le collecteur de données (2) soit effectuée.

2. Procédé selon la revendication 1, **caractérisé en ce que** les données sont des données de programme de mise à jour, des données de consommation, des données de synchronisation, des données temporelles ou analogues.

3. Procédé selon la revendication 1 ou 2, **caractérisé en ce que** la séquence de synchronisation (13) est modifiée à l'intérieur de la session commune, et est en particulier raccourcie vers la fin de la session.

4. Procédé selon l'une des revendications précédentes, **caractérisé en ce que** les données ainsi que la séquence de synchronisation (13) sont transmises dans des paquets de données (11) et **en ce que** le rapport entre les données et la séquence de synchronisation (13) est modifié à l'intérieur de la session, et est en particulier augmenté vers la fin de la session.

5. Procédé selon l'une des revendications précédentes, **caractérisé en ce que** la largeur de bande de réception de l'unité de mesure respective est inférieure à 25 kHz, de préférence inférieure à 20 kHz, de préférence inférieure à 5 kHz, de préférence inférieure à 3 kHz, et plus préférablement inférieure à 2 kHz.

6. Procédé selon l'une des revendications précédentes, **caractérisé en ce que** le rapport entre la largeur de bande de réception de l'unité de mesure respective et la tolérance de fréquence de son dispositif de référence de fréquence (6) est inférieur à 0,5, et de préférence inférieur à 0,3.

7. Procédé selon l'une des revendications précédentes, **caractérisé en ce que** la fréquence d'émission du collecteur de données (2) est déterminée par l'unité de mesure respective par balayage de fréquence et/ou estimation de fréquence.

8. Procédé selon l'une des revendications précédentes, **caractérisé en ce que** la distribution des données est effectuée en diffusion ou en multidiffusion.

9. Procédé selon l'une des revendications précédentes, **caractérisé en ce que** le procédé comprend en outre l'étape suivante :
la synchronisation des dispositifs de référence de fréquence (6) des unités de mesure par la séquence de synchronisation (13).

10. Procédé selon l'une des revendications précédentes, **caractérisé en ce qu'**une information de temps est associée à la séquence de synchronisation (13) et **en ce que** le module de communication (5) peut déterminer le deuxième temps d'émission t2(n) sur la base de l'information de temps.

11. Procédé selon l'une des revendications précédentes, **caractérisé en ce que** l'unité de mesure génère une confirmation de synchronisation SB une fois que la synchronisation a été effectuée et l'envoie au collecteur de données (2) afin de confirmer la synchronisation du dispositif de référence de fréquence (6) au collecteur de données (2).

12. Procédé selon l'une des revendications précédentes, **caractérisé en ce que** le deuxième temps d'émission t2(n) comprend plusieurs instants d'émission n consécutifs dans le temps lors desquels le collecteur de données (2) émet les paquets de données (11) devant être émis.

13. Procédé selon l'une des revendications précédentes, **caractérisé en ce que** des séquences de synchronisation pilotes (13a) sont associées aux paquets de données (11) et/ou à la série de paquets de données (11), dans lequel il est notamment fait en sorte que l'émission des paquets de données (11) et/ou de la série de paquets de données (11) s'effectue en alternance avec les séquences de synchronisation pilotes (13a) intercalées.

14. Procédé selon l'une des revendications précédentes, **caractérisé en ce que** les unités de mesure comportent une mémoire de données (7) et **en ce que** les paquets de données (11) reçus ou des parties des paquets de données (11) reçues sont stockés dans la mémoire de données (7).

15. Procédé selon l'une des revendications précédentes, **caractérisé en ce que** le procédé comprend en outre les étapes suivantes :
- la génération d'un accusé de réception EB par les unités de mesure sur la base des paquets de données (11) reçus et la transmission de l'accusé de réception EB au collecteur de données (2) par l'intermédiaire du module de communication (5) respectif,
- l'exécution d'une comparaison de données entre l'accusé de réception EB du module de communication (5) et les paquets de données (11) devant être émis par le collecteur de données (2), ainsi que
- la réorganisation des paquets de données (11) devant être émis sur la base de la comparaison de données, de manière à n'émettre que des paquets de données (11) qui n'ont pas encore été reçus par les modules de communication (5) respectifs.

16. Procédé selon la revendication 14 ou 15, **caractérisé en ce que** les unités de mesure complètent les parties des paquets de données (11) et/ou les paquets de données (11) après la réception ou les assemblent en les données.

17. Procédé selon l'une des revendications précédentes, **caractérisé en ce que** l'émission des paquets de données (11) ou de la série de paquets de données (11) est effectuée en alternance avec des pauses d'émission (14) intercalées.

18. Procédé selon l'une des revendications précédentes, **caractérisé en ce que** des pauses de réception sont prévues entre les temps de disponibilité de réception de l'unité de mesure respective.

19. Procédé selon l'une des revendications précédentes, **caractérisé en ce que** la qualité de transmission des fréquences à l'intérieur d'une plage de fréquences déterminée est déterminée par l'intermédiaire du collecteur de données (2) et **en ce que** la fréquence d'émission est établie sur la base des qualités de transmission.

20. Procédé selon l'une des revendications précédentes, **caractérisé en ce que** l'unité de mesure décale la fréquence de réception au moins trois fois, de préférence au moins cinq fois, et plus préférablement au moins dix fois pour la réception de la séquence de synchronisation (13) .

21. Procédé selon l'une des revendications précédentes, **caractérisé en ce que** la distribution des données s'effectue en outre en monodiffusion sur des fréquences différentes.

22. Procédé selon l'une des revendications précédentes, **caractérisé en ce que** la séquence de synchronisation (13) est dimensionnée de telle sorte qu'elle soit au moins trois fois, de préférence au moins dix fois, et plus préférablement au moins vingt fois plus longue qu'une séquence de synchronisation en monodiffusion.

23. Procédé selon l'une des revendications précédentes, **caractérisé en ce que** la séquence de synchronisation (13) est émise en une seule fois.

24. Système de communication (1) permettant la distribution de données dans lequel les données sont distribuées en particulier conformément à un procédé selon l'une des revendications précédentes, comprenant un groupe d'unités de mesure, en particulier des dispositifs de mesure de consommation (4), qui sont respectivement agencés pour mesurer la consommation d'un milieu d'alimentation fourni, et
un collecteur de données (2), dans lequel chaque unité de mesure comprend un module de communication (5) et un dispositif de référence de fréquence (6) ainsi qu'un processeur (10) pour faire fonctionner l'unité de mesure, dans lequel la largeur de bande de réception de l'unité de mesure se situe dans une plage à bande étroite, et dans lequel le rapport entre la largeur de bande de réception de l'unité de mesure respective et la tolérance de fréquence de son dispositif de référence de fréquence (6) est inférieur à 1, dans lequel
le collecteur de données (2) est conçu pour émettre les données par l'intermédiaire du système de communication (1) à l'intérieur d'une session commune au groupe d'unités de mesure à une fréquence d'émission, dans lequel
à l'intérieur de la session commune, une séquence de synchronisation (13) commune aux unités de mesure est émise par le collecteur de données (2), et
les unités de mesure recherchent activement la séquence de synchronisation (13), dans lequel
la séquence de synchronisation (13) est dimensionnée de telle sorte que le dispositif de référence de fréquence (6) de chaque unité de mesure du groupe d'unités de mesure à l'intérieur d'une session se synchronise avec la séquence de synchronisation (13) émise, dans lequel la synchronisation du dispositif de référence de fréquence (6) comprend la synchronisation d'une fréquence porteuse de réception sur la fréquence porteuse du collecteur de données, de telle sorte que,
suite à la synchronisation des dispositifs de référence de fréquence (6) des unités de mesure du groupe, l'émission des données par le collecteur de données (2) soit effectuée.

25. Unité de mesure, en particulier dispositif de mesure de consommation (4), qui peut recevoir et/ou émettre des données et dans laquelle les données sont distribuées de préférence au moyen d'un procédé selon l'une des revendications précédentes, comprenant
un module de communication (5),
un dispositif de référence de fréquence (6),
un processeur (10) pour faire fonctionner l'unité de mesure, dans lequel
la largeur de bande de réception de l'unité de mesure se situe dans une plage à bande étroite, et dans lequel le rapport entre la largeur de bande de réception de l'unité de mesure respective et la tolérance de fréquence de son dispositif de référence de fréquence (6) est inférieur à 1, dans lequel
l'unité de mesure est conçue pour recevoir une séquence de synchronisation (13) émise par un émetteur sur une fréquence de réception, et
l'unité de mesure est mise en fonctionnement de telle manière qu'elle décale la fréquence de réception pour recevoir la séquence de synchronisation (13) au moins trois fois, de préférence au moins cinq fois, et plus préférablement au moins dix fois, de telle sorte que l'unité de mesure recherche activement la séquence de synchronisation (13), et de telle sorte que, suite à la synchronisation de la fréquence de réception des dispositifs de référence de fréquence (6), la réception des données, en particulier des données de programme de mise à jour ou d'une partie des données, soit effectuée par le collecteur de données (2).
